(19) **Europäisches Patentamt** / **European Patent Office** / **Office européen des brevets**

(11) **EP 3 475 395 B1**

(12) **EUROPEAN PATENT SPECIFICATION**

(45) Date of publication and mention of the grant of the patent:
**22.04.2020 Bulletin 2020/17**

(21) Application number: **17761134.0**

(22) Date of filing: **03.08.2017**

(51) Int Cl.:
$C10J\ 3/26^{(2006.01)}$      $C10J\ 3/72^{(2006.01)}$
$C10J\ 3/74^{(2006.01)}$      $C10J\ 3/82^{(2006.01)}$
$C10K\ 3/00^{(2006.01)}$      $C10J\ 3/52^{(2006.01)}$

(86) International application number:
**PCT/IB2017/054756**

(87) International publication number:
**WO 2018/025216 (08.02.2018 Gazette 2018/06)**

(54) **PYROGASIFICATION UNIT AND PROCESS**

PYROVERGASUNGSGERÄT UND VERFAHREN

UNITÉ ET PROCÉDÉ DE PYROGASIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2016 IT 201600082716**

(43) Date of publication of application:
**01.05.2019 Bulletin 2019/18**

(73) Proprietors:
• **Mini, Leandro**
  **00042 Anzio, Roma (IT)**
• **Ruggeri, Roberto**
  **00042 Nettuno, Roma (IT)**

(72) Inventors:
• **Mini, Leandro**
  **00042 Anzio, Roma (IT)**
• **Ruggeri, Roberto**
  **00042 Nettuno, Roma (IT)**

(74) Representative: **Raimondi, Adriana et al**
  **Cavattoni - Raimondi,**
  **Viale dei Parioli, 160**
  **00197 Roma (IT)**

(56) References cited:
  **EP-A1- 0 136 313      WO-A1-2008/059109**
  **WO-A1-2015/039640      US-A1- 2006 265 954**

**Description**

*Technical field of the invention*

The invention relates to a pyrogasification process carried out using a pyrogasification unit, also referred to below as a gasifier, for the production of syngas from biomass, for example ligneous biomass. More particularly the invention relates to a distributed solid bed pyrogasification process.

The pyrogasification unit and the pyrogasification process according to the invention resolve the problem of the presence of tar in the syngas produced in such process by reducing its presence to the point that it can be passed to an endothermic engine without causing premature breakdown.

The pyrogasification unit according to the invention comprises a reactor of frustoconical shape with internal walls of refractory material provided with a first opening or upper opening for entry of the gasifying agent, typically air, and a second opening or lower opening for the exit of syngas.

The upper opening is the only entry point for the gasifying agent and no other openings for the ingress of gasifying agent are provided. Advantageously the upper opening is equal to the entire upper surface area of the reactor, and therefore will not be a nozzle or an entry window, but a proper open vessel, to ensure that the gasifying agent interacts uniformly and engages the entire upper surface of the reactor to then propagate continuously towards the bottom through each area of every transverse cross-section of the said reactor. The pyrogasification process therefore propagates from top to bottom in a gradual, progressive and geometrically self-regulated way thanks to the frustoconical shape and the extramolarity of the pyrogasification reactions. The syngas produced thus passes through the full height of the reactor, being exposed to prolonged cracking action resulting in a product with a low tar content being obtained.

*Known art*

Gasifiers make use of molecular dissociation, defined as pyrolysis, which is used to directly convert organic materials into gas through heating them in the presence of small quantities of oxygen. These organic materials are completely destroyed and under such conditions long carbon chains are generally produced and broken up into simpler molecules of carbon monoxide, hydrogen and methane, which form a "synthesis gas" or syngas. Syngas is a mixture of gases largely comprising carbon monoxide, hydrogen, nitrogen and carbon dioxide. Other pyrogasification products are "char", a carbonaceous solid very similar to charcoal, and "tar", a liquid which is harmful to equipment comprising aromatic hydrocarbons of the tarry type, and nanoparticulate. The environmental impact of a pyrogasification unit increases with increasing percentage of tar in the syngas, the presence of which depends on many factors such as the combustion temperature, the pressure in the reactor and the nature of the fuel used.

The technology for the pyrogasification of ligneous biomass for the production of syngas and subsequent use in endothermic engines is based on patents by the engineer Georges Imbert from 1923 to 1934 (fixed bed downdraught reactor), to which some even major modifications have been made over the years (fluidised bed reactors, entrained flow reactors, etc.), but these have nevertheless failed to resolve the problems relating to the extensive presence of tar (in the form of aerosol at working temperatures) within the syngas.

The presence of these compounds, which have a dew point of around 300°C, results in their condensing along the path leading from the reactor outlet to the endothermic engine, causing fouling and over time irreversible malfunctions.

Many solutions are used to eliminate tar, but apart from their efficiency they are extremely costly or cumbersome or sometimes both; in any event they are unsuitable for small-scale energy generation.

Normally the gasification units in the state of the art operate in the presence of air in a substoichiometric ratio to raise the temperature in the so-called combustion zone of the plant.

Normally air is introduced via nozzles about one third of the way up the reactor so that this rise in temperature results in thermal degradation processes in the overlying biomass.

This technical solution nevertheless has the result that the higher temperature zone is small in size in relation to the overall volume of the reactor and pyrolysed biomass, and therefore the quantity of syngas produced.

Consequently the gas passes through this zone in too short a time to allow for an effective reduction in tars in the reactor.

Thus at the present time the main solution for removing tar from syngas consists of successive treatments after the gas has left the reactor; apart from their effectiveness, these methods are not suitable for use in small-sized plant.

See for example patent application US2015/218472 which provides for the use of an organic liquid based on polysiloxane. In this case, apart from the complexity of the plant, there is also the problem of treatment of the wastes deriving from the interaction between the gas flow rich in tar and the cleaning agent. These difficulties, although capable of solution in large-scale plants, would be unmanageable in small-scale plants.

Patent application EP1203802 describes a pyrogasification unit for the conversion of biomass into syngas comprising a reactor that is open at the top and provided with side openings for passage of the gasifying agent. In this pyrogasification unit the air coming from above has the function of maintaining a region at high temperature which favours devolatilisation of the biomass and partial pyrogasification of the charcoal, while the pyrogasification process is completed at the bottom of the reactor thanks to the nozzles through which air is blown. The presence of both the said openings may however favour combustion of the syngas produced within the gasification unit, to the detriment of the efficiency of the process.

The same problem is presented by the pyrogasification unit described in patent application US 2006/265954, which although at first sight may appear to be similar to the one according to the present invention, works using a profoundly different process.

In the technical solution described in patent application US2006/265954 there are nozzles located on the lateral surface of the pyrogasification unit which determine the position and size of the oxidation zone (providing energy to the process) and the cracking zone, which are partitioned off and separate from each other. Under these conditions the frustoconical geometry of the reactor has no significant effects in self-regulating the process. Above all air entry from above comprises a nozzle which delivers air in a localised way and therefore impedes air distribution and uniform activation of the entire upper surface, substantially reducing the ability of cracking reactions to be initiated and reducing the tar-removing effect, thus yet further contributing to the production of a syngas rich in tar.

This solution is not therefore significantly different from others in the known art and based on a double injection of air, upstream and downstream of the reduction zone in the reactor (double flame gasification units).

In such technical solutions it is also possible that the excess air will result in excessive and uncontrolled combustion of some of the syngas produced; in addition to this the resulting volume of the reduction zone is very much smaller and is proportionately of lesser size than that which can be obtained according to the present invention, with consequently reduced abilities to remove tar.

In addition to this, the ingress of air into the bottom part of the reactor can give rise to rapid oxidation reactions of the syngas and the creation of potentially hazardous overpressures or truly explosive conditions.

A need has been felt to develop a pyrogasification process and a pyrogasification unit which solve the problems associated with the presence of tar in the exiting syngas and which make it possible to produce syngas at low cost on a small scale. In particular there has been felt a need for a process which, in comparison with the known art, increases the efficiency of tar cracking and therefore increases the size of the cracking zone in relation to the quantity of syngas produced, which raises the temperature of the entire cracking zone and which increases the residence time of the syngas in the aforesaid zone.

### *Summary of the invention*

According to the present invention the pyrogasification process for the production of a synthesis gas (syngas) which is substantially free of the tar present in the syngas (or has a very small content) is achieved through a pyrogasification unit of frustoconical geometrical shape provided with a single inlet for the gasifying agent placed above and coinciding with the entire surface area of the major base of the truncated cone (referred to as the mouth of the reactor). The frustoconical geometrical shape of the gasification unit according to the invention is suitable for making use of the extramolarity of the gasification reactions and makes it possible to self-regulate the delivery of gasifying agent into the reactor under different operating conditions. In practice the air which enters the frustoconical reactor only from above and is distributed over the entire upper surface reacts evenly with the biomass from top to bottom at high temperature and produces a syngas which under the same conditions would occupy a volume of approximately twice (typically approximately 8/5) of that of the reacted gasifying agent. This has the result of creating a back-pressure which naturally governs the flow of entering gasifying agent, stabilising it, and which consequently increases the residence time for syngas within the reactor and the cracking zone.

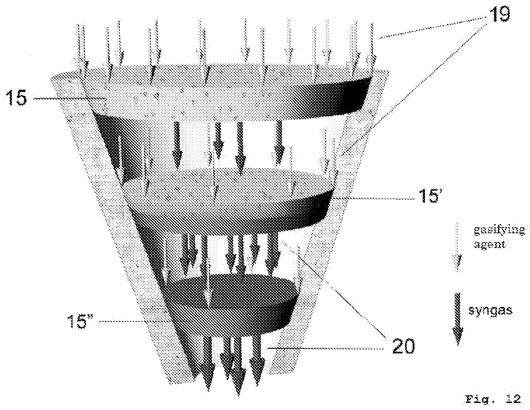

In addition to this the reaction gives rise to a decrease in the gasifying agent (which is converted into syngas) present in the various parts of the reactor and here the conical shape acts so that the biomass intercepted by the gasifying agent decreases in proportion to the decrease in the gasifying agent so as to prevent the occurrence of zones in the reactor where they do not react and therefore maintaining significantly lower temperatures in comparison with those needed for activating tar-cracking reactions. Within the reactor there is therefore a progressive, gradual and self-regulated pyrogasification process in which, thanks to the presence of the open vessel (open vessel reactor) the pyrolysis, oxidation and cracking stages (or reactions) coexist at every point within the reactor and throughout the full area of each transverse cross-section of the reactor, with relative equilibrium between the three reactions, depending upon the quantity of gasifying agent which is still able to react with the residual biomass (Figure 12).

The pyrogasifier carrying out the process according to the invention comprises the following main elements:

- a reactor of frustoconical shape (also referred to simply as a cone) with internal walls of refractory material, which conserve the energy generated by the reaction within the volume of the cone, that is completely open at the top (first opening) for the entry of a gasifying agent and provided below with a second opening for the exit of syngas; it is crucial that there should be no other holes, nozzles or other openings apart from the first opening, or upper opening, or mouth of the reactor for entry of the gasifying agent in order to ensure that pyrogasification progresses uniformly from top to bottom throughout the whole volume of biomass in the zone. The reactor may be provided with a device for distributing and agitating the biomass within the cone, made of a material that is resistant to high temperatures and capable of being exposed to mechanical forces without deterioration. This levelling-agitator device comprises a shaft located along the axis of rotation of the cone and may be made of tungsten (or a material having similar characteristics), to which arms and/or blades are radially connected (for example by welding), also of tungsten (or a material having similar characteristics), of different sizes which can wipe the walls of the cone. This device ensures that the biomass maintains uniform density within the frustoconical reactor and that no preferential paths for passage of the gasifying agent or syngas are created;

- an expansion chamber placed in communication with the second reactor opening;
- suction means to generate a flow of gasifying agent and/or syngas from top to bottom within the reactor;
- a conduit for the exit of syngas downstream from the expansion chamber;
- a system for the collection of solid process wastes.

The said suction chamber, suction means and outlet conduit are located below the reactor.

It is also an object of the invention the process of pyrogasification making use of the pyrogasification unit according to the present invention and it comprises the main stages of:

(i) filling the pyrogasification unit with charcoal to a portion of between 6/8 and 7/8 of the height of the truncated cone;
(ii) igniting the charcoal by means of an external burner;
(iii) starting up the suction means and when the charcoal reaches a temperature of at least 800°C adding biomass until the reactor is filled;
(iv) as the pyrogasification reaction proceeds, adding biomass keeping the level to which the reactor is filled constant and at the same time drawing off syngas and the ashes produced from the bottom;

the said process being characterised in that the pyrolysis, oxidation and cracking reactions coexist at every point within the internal volume of the truncated cone, with relative equilibrium between them which is controlled by the combination of the frustoconical shape and the extramolarity conditions specified below.

Further objects will be evident from the detailed description of the invention.

### Brief description of the figures

Figure 1 is an axonometric sectional view of the reactor according to the present invention;
Figure 2 is a schematic representation of the elements making up the reactor: the cone of refractory material 2a; the protective jacket and its components 2b;
Figure 3 is a schematic cross-section through the reactor of frustoconical shape with an aperture angle $\alpha$;
Figure 4 is a schematic view of the cross-section of the pyrogasification unit according to the present invention during the start-up stage;
Figure 5 is a schematic view of the cross-section of the pyrogasification unit during the feeding stage;
Figure 6 is a schematic view of the cross-section of the pyrogasification unit during the operating stage;
Figure 7 is a schematic cross-section of the reactor illustrating the conservation of thermal energy within the reactor making it available for the cracking stage;
Figure 8 is a schematic cross-section illustrating the flow of syngas within the reactor;
Figure 9 is a schematic cross-section of the reactor which indicates the envisaged ratio between the volume of the drying/pyrolysis zone and the reduction zone;
Figure 10a is the same view as in Figure 1 with the rotating leveller/agitator device with movable blades;
Figure 10b is the same view as in Figure 10a with cover 5;
Figure 10c is a schematic view in cross-section of the rotating leveller/agitator device with movable blades;
Figure 11 is a schematic 3D view of the arrangement of the thermal sensors along the circumference of the cone;
Figure 12 is an illustration of the pattern of distribution of air and syngas produced within the reactor;
Figure 13 is a schematic 3D view of the slots for the exit of syngas towards the expansion chamber;
Figure 14 is a schematic view of a preferred solution for the extraction of ash from the reactor;

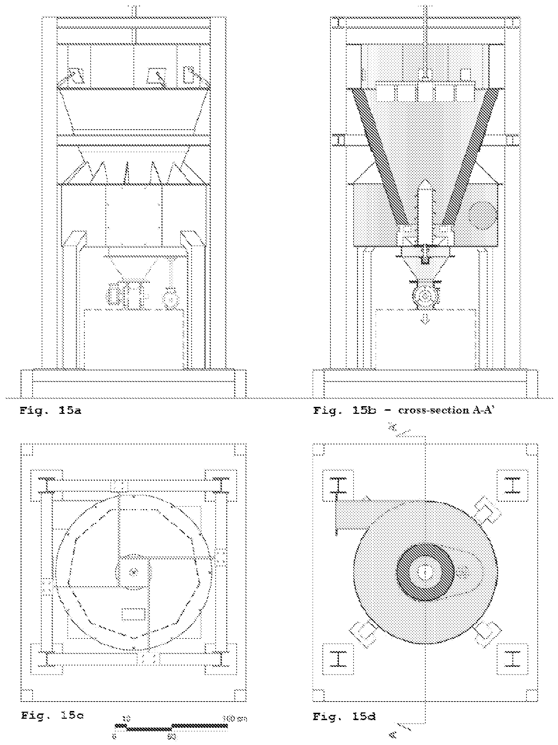

Figure 15a is a frontal view of the assembled pyrogasification unit reactor complete with the supporting structure;
Figure 15b is a cross-section along AA' of the assembled pyrogasification unit reactor together with the supporting structure;

Figure 15c is a view from above of the assembled pyrogasification unit reactor with the supporting structure;
Figure 15d is a horizontal cross-section of the pyrogasification reactor at the level of the expansion chamber;
Figure 16 is a 3D model of a device for extracting the ash produced in the reactor.

## *Key*

| | |
|---|---|
| Reactor | 1 |
| Truncated cone of refractory material | 2 |
| First opening or upper opening or mouth of the reactor | 2' |
| Second opening or lower opening | 2" |
| Protective jacket | 3 |
| Expansion chamber | 4 |
| Cover or lid | 5 |
| Opening for the addition of biomass | 5' |
| Perforated ennagon for the entry of gasifying agent | 6 |
| Openings which can be closed off with servo-controlled doors | 6' |
| Perforated cylinder | 7 |
| Openings or slots for the exit of syngas | 7' |
| Extractor | 8 |
| Extractor space | 9 |
| Syngas extraction conduit | 10 |
| Star valve conduit | 11 |
| Ash collection container | 12 |
| External ignition | 13 |
| Suction pump | 14 |
| Biomass | 15 |
| Partly degraded biomass | 15' |
| Degraded biomass (charcoal and ash) | 15" |
| Loading system with opening for the exit of biomass | 16 |
| Blade leveller-agitator device | 17 |
| Tines of the leveller-agitator device | 17' |
| Sensors k | 18 |
| Gasifying agent | 19 |
| Syngas | 20 |
| Rotating plate | 21 |
| Motor centring bush | 22 |
| Extractor centring bush | 23 |
| Protective casing | 24 |
| Electric motor and gearbox | 25 |
| Transmission shaft | 26 |
| Discharge cone | 27 |

## *Detailed description of the invention*

In the context of the present invention

- by the term "extramolarity" is meant the circumstance on the basis of which for each mole of gasifying agent involved in the pyrogasification process there is created a larger number of moles of the product gas (syngas), in particular approximately 2 (typically 8/5);
- by the term "pyrolysis reaction" is meant thermal degradation of the biomass as a result of which a fraction thereof is converted into syngas;
- by the term "oxidation reaction" is meant the complex of exothermic reactions for the oxidation of biomass and/or charcoal in the presence of the oxygen contained in the gasifying agent;

- by the term "cracking reaction" is meant the complex of endothermic reactions which reduce the chain length of the organic compounds present in the syngas, and in particular of the tar, transforming them to simpler gaseous compounds, in particular $H_2$ and CO;

- by the term "self-regulated reaction" is meant the ability of the reactor to draw into it the precise quantity of gasifying agent required for optimum occurrence of the pyrogasification reactions, independently and without the need for external control devices. This capability is achieved through the combination of the tendency of the syngas to expand (by virtue of the specified extramolarity) together with the reduction in the available cross-sections due to the frustoconical shape of the reactor, this combination producing a back-pressure force which helps to limit and in fact self-regulates the excessive entry of gasifying agent and holds the syngas within the reactor for a sufficient time for substantially complete cracking. Thanks to this substantially complete cracking the hydrocarbon chains of the organic compounds of the biomass are reduced to $H_2$ and CO, and tars are no longer present in the syngas;

- by the term "distributed solid bed" is meant the condition in which the cracking bed, which in the known art is limited to precise zones of the reactor, is in the present invention extended to the entire volume of the reactor;

- by the term "open vessel reactor" is meant a reactor in which the gasification agent is fed into the reactor in an unregulated quantity from outside through the entire upper cross-section of the reactor (reactor mouth);

- by the terms "process" or "reaction" or "pyrogasification reactions" are meant all the reactions which take place within the frustoconical reactor and which lead to the production of syngas; these are mainly the reactions of pyrolysis, oxidation and cracking.

The pyrogasification unit for the production of syngas according to the present invention comprises an open vessel frustoconical reactor, that is with an upper opening extending over the entire cross-section for entry of the gasifying agent, which therefore does not enter the reactor via a channelled flow and/or with preferential paths, but is uniformly distributed over the mouth of the truncated cone.

The gasification unit comprises a reactor 1, comprising a truncated cone 2 with an aperture angle $\alpha$ of refractory material surrounded by a protective jacket 3 and an expansion chamber 4.

It is crucial that the lateral surface of truncated cone 2 is devoid of any openings or zones through which the gasifying agent enters, given that even accidental or casual entry of the latter laterally could give rise to uncontrolled combustion of the syngas produced within the reactor, with a consequent loss of efficiency in the syngas production process. When suitable conditions are present it could also give rise to an explosion within the reactor due to lateral entry of the gasifying agent, and not entry exclusively via the upper opening of the reactor.

In the situation where the design of the reactor provides for the presence of openings in the lateral surface, these will be sealed in such a way as to prevent gasifying agent from entering while the reactor is in operation.

In the event of explosions due to unforeseen causes the frustoconical shape of the reactor advantageously has the effect of depotentiating reactions and reducing the risk of damage.

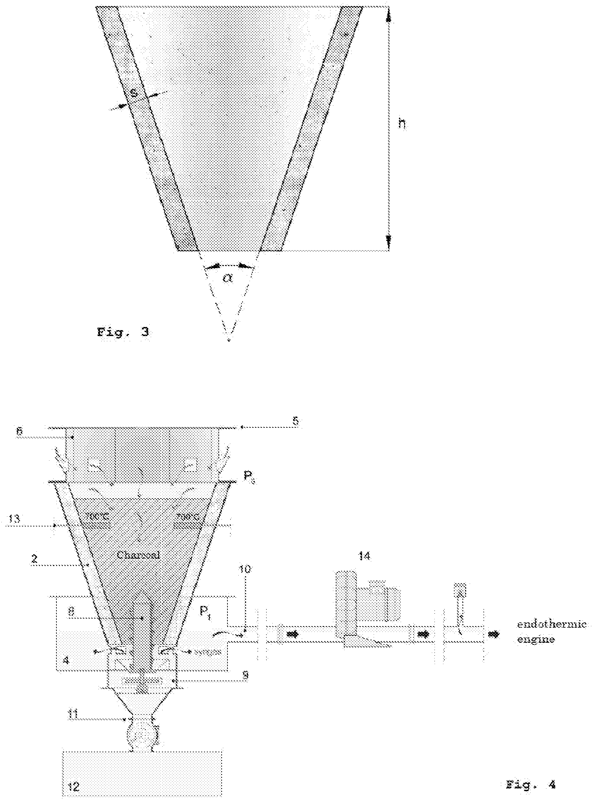

Aperture angle $\alpha$ (Figure 3) of the cone bounding the walls of the reactor varies between 20° and 40°; a smaller aperture angle would reduce the available surface area and therefore the quantity of gas which can be delivered per unit time (power of the reactor) and would favour the ingress of excess air into the reactor with consequent oxidation of the syngas produced (minor back-pressure effect due to expansion of the syngas), while a larger aperture angle would encourage the deposition of mass along the inclined walls of the reactor, favouring preferred paths for the gases and reducing the efficiency of the reactor.

The lower diameter of the truncated cone is dimensioned so as to obtain a transit velocity for the exiting gas of between 2 and 4 m/s; at velocities higher than this range cracking could be less efficient, at lower velocities problems of oxidation of the gas might occur.

A distinctive element of the reactor according to the present invention comprises the fact that the gasifying agent, typically air, which is introduced via upper opening 2, and flows downwards without additional lateral additions does not bring about stratification or localisations in which the stages of pyrolysis, oxidation and reduction can be virtually separated, stratifications and/or localisations which are instead typical of a fixed bed or double flame reactor.

The reactions take place simultaneously and uniformly (distributed solid bed) at every point within the volume of the reactor according to the invention (Figure 12).

Advantageously the reactor according to the present invention is lagged over the entire lateral surface so as to increase the efficiency of the process.

Unlike the gasification units in the state of the art, the pyrolysis reaction does not take place under conditions of oxygen deficiency, instead the geometrical characteristics of the reactor have the effect that as the gasifying agent proceeds from top to bottom it is capable of reacting with all the biomass available without initiating any combustion phenomena. Proceeding from top to bottom of the reactor the gasifying agent is progressively replaced by syngas produced in a gasifying agent/syngas ratio which decreases in relation to the decrease in the radius of the cross-section of the cone.

The quantities of gasifying agent and syngas vary percentagewise from the top to the bottom of the reactor in accordance with the formulae below.

Let h be the level at which it is desired to know the percentage quantities of gasifying agent and syngas, a level which is identified in an upwards direction from bottom to top of the reactor.

Let $R(h)$ be the radius of the truncated cone at the corresponding level h,

Let $R_{max}$ be the upper radius of the truncated cone (upper opening),

Let $R_{min}$ be the lower radius of the truncated cone (lower opening),

Let $A\%(h)$ be the percentage of gasifying agent at level h,

Let $A(h)$ be the quantity of air in $m^3/h$ at level h,

Let $A_0$ be the initial throughput of gasifying agent in $m^3/h$,

Let $A_r(h)$ be the quantity of air which has reacted up to level h,

Let $S(h)$ be the quantity of syngas in $m^3/h$ at level h.

We will have:

$$A\%(h) = [(R(h) - R_{min}) / (R_{max} - R_{min})]^2 \qquad (I)$$

and therefore in terms of $m^3/h$ we will have:

$$A(h) = A_0 . A\%(h) = A_0 . ((R(h) - R_{min}) / (R_{max} - R_{min}))^2 \qquad (II)$$

which gives us the quantity of residual air at level h.

The quantity of air which will have reacted at level h will conversely be equal to:

$$A_r(h) = A_0 - A(h) = A_0 . (1 - [(R(h) - R_{min}) / (R_{max} - R_{min})]^2) \qquad (III)$$

Thus, knowing that the ratio between air and syngas during the reaction is 8/5 (extramolar reaction), we can know the quantity of syngas at level h:

$$S(h) = 8/5 . A_0 . (1 - [(R(h) - R_{min}) / (R_{max} - R_{min})]^2) \qquad (IV)$$

Applying formulae II-IV it will be seen how the process of replacing the gasifying agent with syngas proceeds uniformly from top to bottom, and in particular how at level h corresponding to $R_{max}$ only gasifying agent is present while at level h corresponding to $R_{min}$ the latter has been completely replaced by syngas which is subsequently drawn from the reactor.

Applying formulae II-IV shows how the process of replacing the gasifying agent with syngas plays the part in the present invention which the substoichiometry of the gasifying agent plays in the known art, with the advantage that a greater quantity of gasifying agent is made available in the reaction and therefore more energy is available for the cracking reactions.

The invention also benefits from the known extramolarity of the pyrogasification reactions which give rise to an increase in the volume of the gas. In particular, for every $Nm^3$ of air which reacts, approximately 8/5 $Nm^3$ of syngas will be formed; this increase in volume during pyrogasification builds up a back-pressure which helps to distribute the air uniformly within the volume of the reactor, thus increasing the size of the cracking zone, extending it to the entire volume of the truncated cone.

In the reactor according to the invention negative pressure is applied by means of a suction pump or more generally by suction means connected to the bottom of the reactor and varying within the range 30-5 mbar, and preferably 10 mbar at the expansion chamber. When the negative pressure exceeds a threshold value of approximately 30 mbar the extractor is switched on to restore optimum negative pressure.

The desired dimensioning of the truncated cone has the result that the pyrolysis gas produced through the effect of temperature is accelerated towards the outlet, located below reactor 2". During the descent, part of the syngas reacts with the oxygen present within the reactor to raise the temperature and therefore give rise to the pyrolysis and cracking reactions, while the excess survives as far as the end of reactor 2", from which it is extracted through suction by means of for example the pump located downstream.

In general a 55 $Nm^3/h$ reactor is approximately 55 cm tall with a lower opening diameter of approximately 7 cm and an aperture angle of 30°. Similarly a 170 $Nm^3/h$ reactor is approximately 80 cm tall with a lower opening diameter of approximately 15 cm and an aperture angle of 24°.

The geometrical parameters of the reactor determine the completeness of the pyrogasification reactions and optimisation between the quantity and quality (in terms of low tar content and calorific value) of the gas produced, by acting on the transit velocity of the gasifying agent and syngas within the reactor. The said velocities are preferably below 2 m/s at the lower opening of the reactor and are independent of the dimensions of the reactor itself. In addition to this the geometry of the truncated cone is calculated so that the residence times for the syngas within the cracking zone are approximately 2 seconds.

The pyrogasifier according to the present invention is characterised by the fact that the gasifying agent enters reactor exclusively through first upper opening 2' so that the pyrogasification process propagates from top to bottom in a gradual and progressive way.

In the technical solutions of the known art the gasifying agent enters at one or more points and levels through nozzles. In this way the distribution of the oxidisation zone (and consequently the cracking and pyrolysis zone) is limited and localised (often in a patchy pattern). Under these conditions the frustoconical geometry loses its self-regulating effect on the process.

Also, if the gasifying agent (air) enters laterally it can ignite the syngas and give rise to explosive reactions or explosions in the case of closed reactors and/or drastically reduce yields.

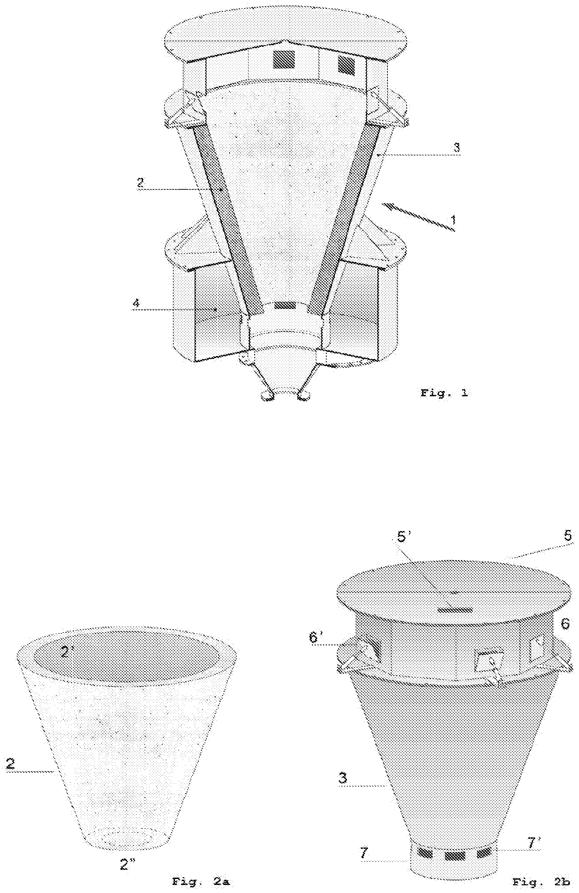

In a preferred embodiment the said reactor may be surrounded externally by a protective jacket (Figure 2b), generally of metal, comprising a central body of frustoconical shape 3, a first hollow portion in the form of a ennagon 6 located above the central body, and a hollow cylindrical portion located below. This jacket is provided with openings 6' to allow the gasifying agent to enter at the ennagon and openings 7' in lower cylinder 7 for exit of the syngas. In the embodiment in Figure 2b, openings 6' are provided with servo-controlled doors which open gradually or selectively.

Hollow cylindrical portion 7, which contains the terminal part of the truncated cone, creates an annular volume which is generally equal to 20% of the internal volume of the reactor and collects the exiting gas.

The pyrogasification unit also comprises an expansion chamber 4 placed in communication with the bottom part of the reactor (Figure 1).

The annular shape of expansion chamber 4 has the function of distributing the negative pressure generated by the suction system in the most uniform possible way so as to hinder the formation of preferred paths for the syngas and gasifying agent within the reactor.

In a preferred embodiment of the invention the gas leaving the reactor flows into expansion chamber 4 via suitable openings, for example openings or slots 7' made in lower hollow cylindrical portion 7 of protective jacket 3, and in this way the paths for the syngas and ash are separated as soon as possible; the former radially and the latter vertically, preventing the biomass from forming obstructions.

Said reactor 1 and expansion chamber 4 experience a suction flow from top to bottom which is suitably controlled by suction means (not shown).

The suction flow is controlled and modulated by means of a suction device whose power can be adjusted through an inverter which is in turn controlled by a PLC or programmable logic controller.

The PLC collects pressure data through one or more vacuum detectors, pressure data preferably through a measuring device of the vortex or mass type, and temperature data through thermocouples k, and processes them so as to hold the reactor within the ranges of relative pressure (typically between -10 and -20 mbar at the outlet from the reactor) and temperature (typically 1000-1200°C in the central zones of the reactor and approximately 450°C at the outlet from the reactor) which are optimum for production of the gas flow desired.

The syngas extraction conduit may be provided with sensors for monitoring the outlet temperature of the syngas and a sensor for measuring the excess of oxygen in the syngas.

This oxygen excess may be associated with the presence of spaces within the reactor which shorten the path of the gasifying agent, limiting its possibility for reaction, or with excessive suction by the suction pump. If oxygen concentrations above the predetermined threshold value are encountered, prompt corrective action is possible. Generally the molar concentration of molecular oxygen in the syngas produced from the pyrogasification unit is approx between 1 and 2%, and therefore an oxygen concentration of above 2% is an indication of malfunctioning of the pyrogasification unit, and restorative action is recommended.

The sensor data gathered by the PLC can give rise to action on the suction system, action on the extractor or reduction of the passage openings for air depending upon the other parameters collected (pyrogasification unit pressure, electrical consumption of the suction system, throughput of extracted gas).

The gas collected in expansion chamber 4 is caused to flow through a conduit 10 and undergoes one or more treatments. Thus cleaning treatment means dust extraction equipments, heat exchangers, various types of filters and so on (not shown) may be located downstream from the said conduit.

It is preferable that conduit 10 be constructed in a tangential position with respect to the outer surface of the expansion chamber in such a way as to increase the effect of redistributing the pressures already mentioned.

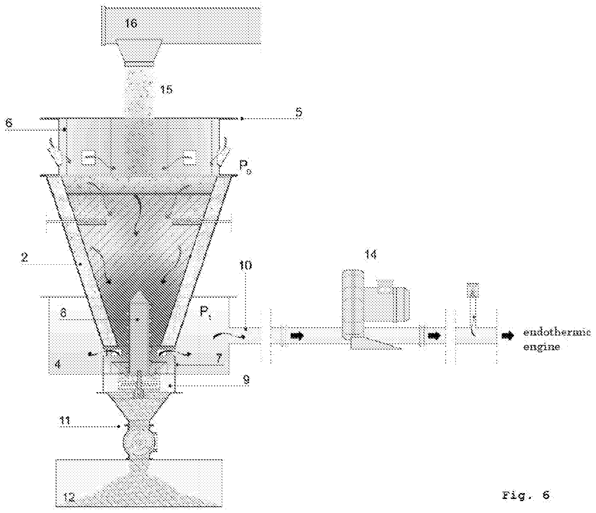

The pyrogasification unit is also provided with a system for the collection of solid process wastes. Solid wastes can to a first approximation be likened to ash and in the context of the present invention follow a path leaving the reactor which differs from that of the gas phase (Figure 6).

The pyrogasification unit is also provided with an extraction system comprising an extractor 9, for example provided with a screw 8 of cylindrical shape equipped with a conical tip, of overall length equal to approximately half the height of the truncated cone.

Extraction is performed by rotating the device by means of a chain transmission protected from the fall of ash by a suitable housing.

The lateral surface of the extractor is constructed in such a way as to aid movement of the material (for example: steps, helical channels, teeth at various inclinations).

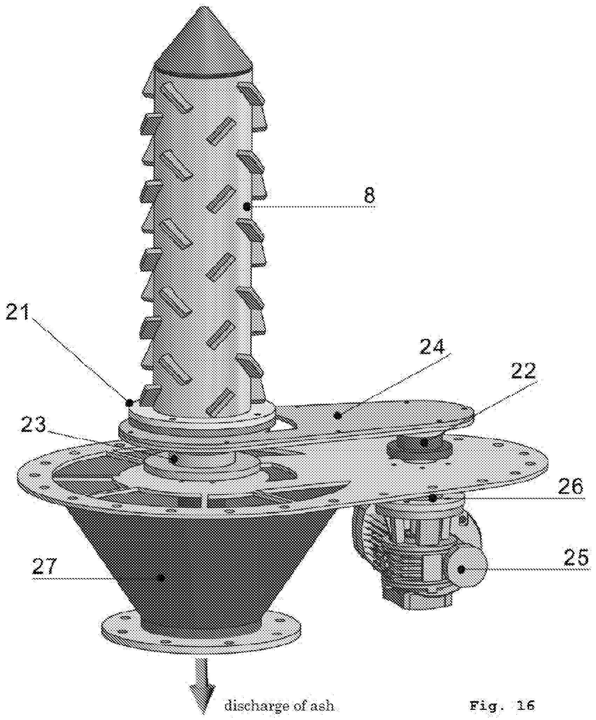

In a preferred embodiment of the invention the extraction device comprises a cylindrical extractor 8, a rotating plate 20, first and second centring bushes 21 and 22, housing 23 protecting the gears (comprising a toothed pinion of the extractor, a transmission chain, and a second toothed pinion of the motor), a transmission shaft 26 for connection to the motor/gearbox unit and electric motor 25; all as illustrated in Figure 16.

Lower opening 2" of the reactor is provided with a conduit 11 which is in turn connected to a collection container 12. The connection may use bottlenecks and/or valves capable of controlling the quantity of ash or the like which has to be discharged into collection container 12.

It is important that the connection between collection container 12 and conduit 11 should be leaktight so as to prevent air from directly entering high temperature zone within the reactor with the effect of causing combustion of the syngas inside the reactor and/or raising the temperature of the ash.

For this reason, in a preferred embodiment of the pyrogasification unit this connection is achieved by means of a star valve constructed of materials and with fittings suitable for prolonged use at temperatures of 300°C or above (Figure 4). The use of refractory material, such as for example cement or suitably shaped refractory bricks with a high alumina content in the innermost layer and insulating cement or rock wool for the outer layer is necessary in order to prevent mechanical deformation and thermal wear which would affect the metals (iron and steel), but above all to keep the energy deriving from partial oxidation of the syngas available for the cracking reactions (Figure 3).

The construction of a pyrogasification unit according to the present invention will take into consideration both the geometrical characteristics of the reactor and the specific operating requirements of each individual application.

Given a fixed aperture angle within the range 20-40°, and the velocity of the syngas leaving the reactor, which is not more than 2 m/s, the surface area of the lower opening of the reactor will be determined on the basis of the flow of syngas which it is intended to obtain from the said pyrogasification unit.

Once the area of the base and the aperture angle of the truncated cone have been determined, its height can then be determined in such a way that the volume of the reactor is equal to or greater than that of the biomass which it is intended to place within.

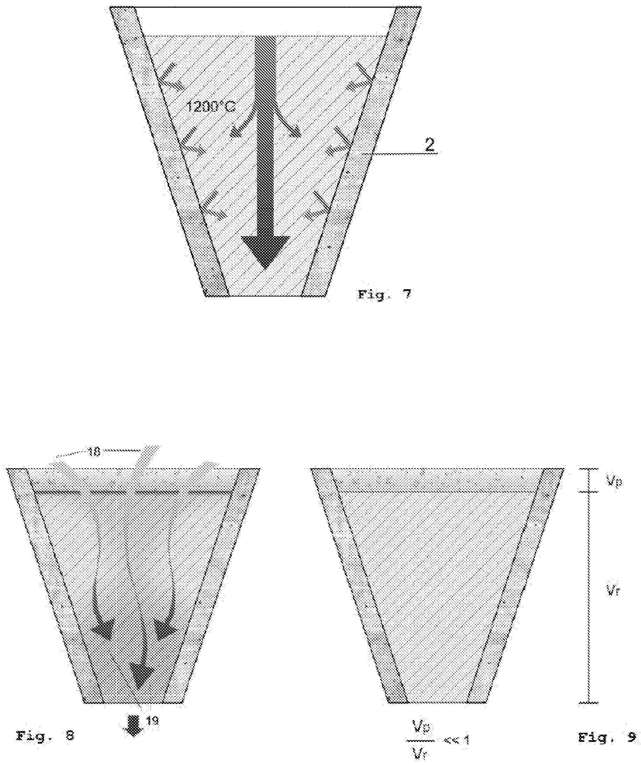

From the calculations performed on a reactor characterised by an upper diameter of 300 mm and a lower outlet diameter of 70 mm, powered by a lateral channel extractor with a power of 3.5 kW, instrumented with removable sensors for monitoring temperature, flow measurement devices and vacuum detectors and connected through a suitable filtering system for final refining of the gas to an internal aspirated combustion engine of 3 litres cylinder capacity, it will be seen that only a small part of the energy possessed by the gas is expended in keeping the cracking zone at temperatures close to 1200°C (Figure 7).

For proper functioning of the reactor it is necessary to maintain the level of biomass fed to it constant in level and uniformity.

By uniformity we mean the absence of spaces and cavities which might represent a preferred path for the gasifying agent or syngas produced, with the result of possibly producing an excess of air in the first case and syngas which has experienced the effect of the reduction zone for a shorter time in the latter.

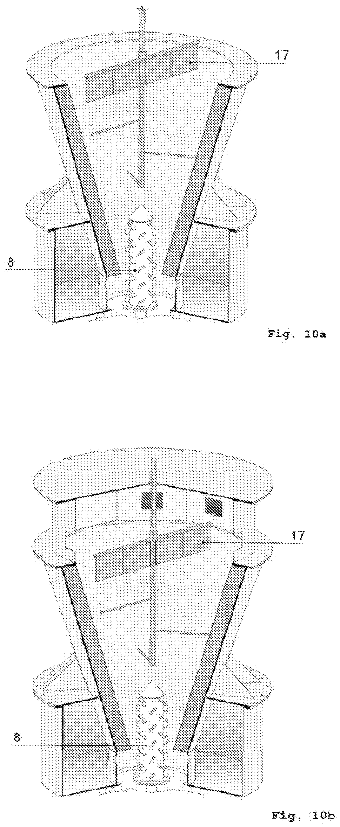

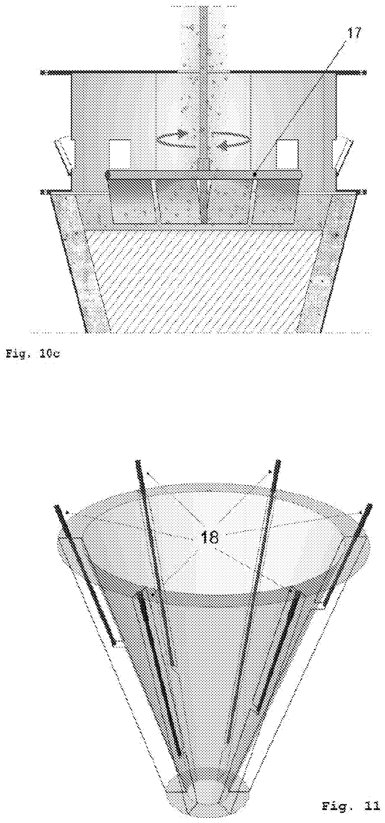

For this reason the reactor may be provided with a levelling system at the top (Figures 10a, b, c), for example by means of slowly rotating tilting distributor blades (17) which maintain a uniform level of biomass at the surface.

Appendages in the form of tines or fingers 17' may be attached to the blades in order to move the biomass bed at depth and prevent the formation of cavities within it.

The shaft driving the blades (17) also extends to a depth within the reactor, having arms or tines (17') at different levels so as to keep the entire volume of the reactor in movement and uniform, the material of which such agitation system is constructed being such as to be capable of resisting high thermal wear and also mechanical force, as it has to rotate within the material at temperatures in excess of 1200°C; tungsten (or other materials having similar thermomechanical properties) will be used for this application.

In order to make it safer and at the same time avoid the transmission of heat to the exterior in the event of malfunctions, the reactor may be provided with a cover 5, which closes off ennagon 6 in a non-sealing manner and covers the mouth of the cone.

The reactor is provided with sensors k (18) to monitor temperature within it, which as has been seen is directly linked to the quantity and quality of the gas produced.

Preferably several temperature sensors, even more preferably at least three, are present, located at different heights in the reactor for better monitoring of the operating conditions.

In a preferred solution of the reactor, six sensors k (18) distributed about the circumference of the cone and with reading points on six levels are used (Figure 11).

At the outlet from the reactor, on the pipe connecting it to the dust extraction cyclone (not shown), a sensor is inserted to monitor the excess oxygen in the syngas produced upstream or downstream from the syngas flow measuring device.

Flow measuring devices may be fitted to the openings allowing entry of the gasifying agent at the head of the reactor to monitor the ratio between quantity of gas produced and the entry of gasifying agent.

As described above, the said system for monitoring output quality can be used to detect any anomalies in the process in good time and act to correct them.

As illustrated in Figure 12 and as mentioned above, the reactions which take place within the reactor are simultaneous, and pyrolysis, oxidation and cracking reactions take place at all points within it.

Another object of the present invention is use of the reactor described above. The functioning of the said reactor provides for the following main stages:

a. start-up of the reactor, comprising charcoal and a flow of gasifying agent, via an external ignition device;
b. charging biomass;
c. producing syngas from the biomass and the gasifying agent;
d. extraction of the syngas.

*Stage a*

During the stage of starting-up reactor 1 it is filled with charcoal to create a first reduction bed to which a flow of gasifying agent from upper opening 2' of the reactor is applied. The energy provided to the system to achieve and maintain the operating temperatures is initially provided by an external igniter, such as for example cartridge resistances, a live flame torch, or other; secondly this energy is provided by the pyrogasification reactions of the charcoal and the flow of gasifying agent, generally air. In particular the flow of gasifying agent passing through the charcoal bed can be generated by a suction pump 14 downstream from expansion chamber 4. During this first stage the reactions are above all exothermic and can establish a temperature above 800°C in a few minutes.

The external igniters, in particular the resistances, are preferably placed in the upper central part of the reactor. When the resistances are fitted, all those steps known to those skilled in the art with a view to preventing the creation of passages for air and preferred paths will be taken.

The gasifying agent is to be understood to be any mixture of air, oxygen and/or steam. Once the desired temperature has been reached, that is 600-800°C, the second stage of operation, that is feeding of the reactor with biomass 15, can take place.

In the context of the present invention by biomass is preferably meant one or more of woodchips, pellets, briquettes of ligneous substance, shredded offcuts, wood waste and other biomass having a moisture content of below 30%.

*Stage b*

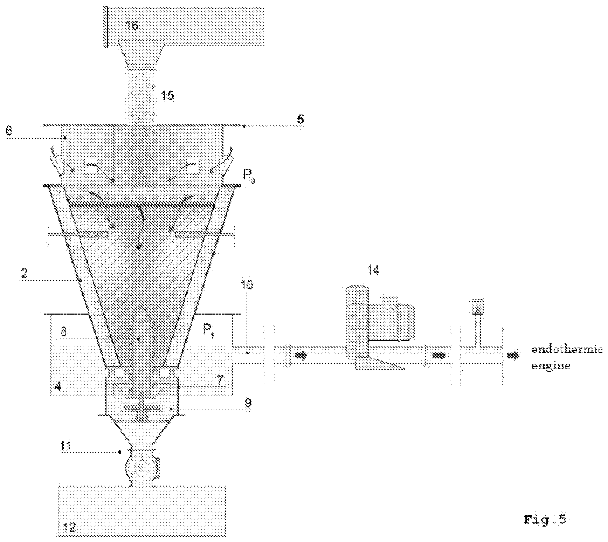

During the second stage of the process the external ignition is switched off or removed and the reactor is ready to enter into operation; the mean temperature in the "cracking zone" (see Figure 5, which in operation occupies approximately the lower 2/3 of the reactor) is approximately 800°C at this stage.

At this point biomass 15 is added so as to fill the reactor.

In a preferred embodiment of the invention reactor 1 is provided with a loading system 16 controlled by level sensors (not shown). The said sensors are preferably an ultrasonic or radar sensor located at a height of one metre or more above the maximum filling level of the reactor and providing feed for the reactor in response to the operating temperature being reached. The reactor may also be provided with a rotating leveller-agitator device 17 with moving blades which maintains the thin layer of biomass necessary for maintaining the height ratio mentioned above (Figure 10) and which, if also provided with the appendages previously described, above all in the case of biomass of non-uniform size, is such as to keep the level of reacting biomass and the top of the reducing bed uniform.

*Stage c*

Digital simulation of the pyrogasification process using data collected on the basis of experiments conducted on a prototype of approximately 20 kW of added biomass is illustrated in the diagram in Figure 12.

In general, while *stage c* is in progress there is propagation of the pyrogasification reaction along the reactor from top to bottom.

Initially biomass 15 located in the top part of the reactor under operating temperature conditions reacts with gasifying agent 19 entering the upper opening of the reactor. At this point both the excess gasifying agent 19 and some of the syngas produced 20 are drawn downwards and the biomass immediately below that which has reacted, now at operating temperature, will in turn react with the gasifying agent. This process is repeated many times from top to bottom in a gradual and progressive way and the quantity of gasifying agent reaching the lower part of the reactor tends to decrease because of reactions with the biomass and the syngas itself; for this reason, as explained above, the volume ratio between the gasifying agent and syngas tends to decrease downwards along the reactor in the direction of flow (Figure 12).

The extent to which reagents and compounds are distributed along the reactor, and the extent to which one family of reactions prevails over another is determined by the expanding action of the syngas contrasting with the restriction in the useful passage cross-section (angle $\alpha$ of the truncated cone of the reactor), performing a "geometrical" self-regulating function on the process.

This circumstance enables the reactor to be in a condition of equilibrium under different operating conditions, continuing to produce a "clean" syngas, that is one which is effectively devoid of tar even under low operating conditions.

Biomass 15 which progressively reacts with the gasifying agent can then be replaced with further biomass. In a preferred embodiment of the invention the quantity of biomass by volume added to the reactor is approximately equal to that which reacts; automatic feed systems to the reactor are used for this purpose.

In other words, in order to optimise operation of the reactor the feed stage described in *stage b* may be repeated in the course of *stage c.*

The frustoconical shape of the reactor has the result that the velocity at which the gasifying agent/syngas mixture passes through is such as to ensure the cracking and reforming reactions, maintaining the chemical equilibria, these being in particular:

the reaction of water gas shift which involves the moisture content of the air and the biomass ($CO+H_2O <-> CO_2+H_2$) and the Boudouard equilibrium ($2CO <-> CO_2+C$) with a reaction condition which we define as a distributed bed.

The frustoconical shape also ensures that, although an open vessel situation is present, no free flames are produced within the reactor (Figure 5).

At the lower end of the reactor the gasifying agent will have completely reacted with the biomass and the mixture will wholly consist of syngas; the syngas has passed through the entire height of the reactor at temperatures of between 1000°C and 1200°C over relatively long periods (in excess of 1.5 seconds).

One advantage of the pyrogasification unit according to the invention lies in the fact that the syngas produced since the upper part of the reactor onwards will encounter cracking reactions as it passes through all or most of its height at high temperatures.

A vigorous cracking stage, breaking up long chain molecules, such as those of tar, makes it possible to have a sufficiently clean gas at the outlet such that a simple filtering system will provide a sufficiently clean gas for delivery as a feed to an internal combustion engine.

Up to now the main technical limit on the application of pyrogasification to electrical power generation resided in the tar content, which gave rise to breakdowns and malfunctions in engines and turbines.

The frustoconical shape of the open vessel reactor, designed with a suitable inclination of the walls (that is a suitable aperture angle) ensures both a surface density of gasifying agent that is constant during the suction process and decreases downwards with gradual conversion of the agent to syngas (Figure 8) and a sufficiently long residence time for the syngas within the reactor to encourage cracking processes (Figure 9).

The frustoconical shape with an inclination $\alpha$ makes it possible to achieve equilibrium between the entering gasifying agent and the quantity of syngas produced, making use of the back-pressure created by expansion of the gas produced by the reaction (extramolarity) encountering a narrowing passage surface.

*Stage d*

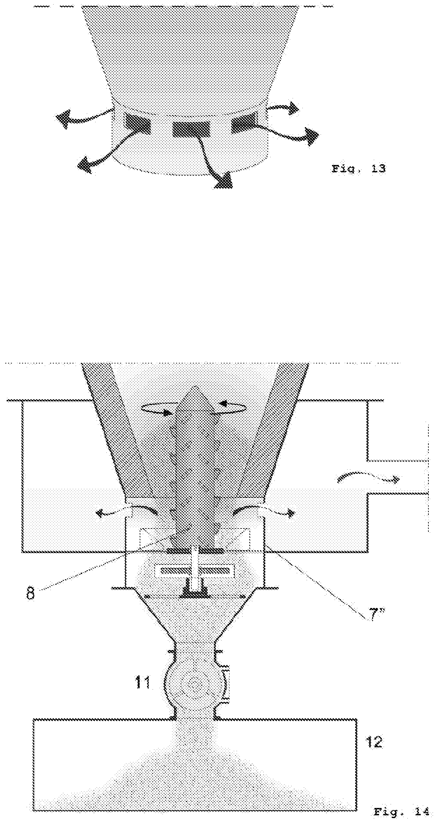

The syngas produced 20 at this point is separated from the path of the biomass (which can now be likened to ash) being extracted via lateral slots 7' made in the lower cylindrical part (7) of protective jacket 3 (Figure 13). The syngas extracted in this way can be subsequently treated through a refining process so that it can be intended for its final use, for example as feed for an endothermic engine. The said refining process comprises known treatments used in the purification of fluids. In a preferred embodiment the treatments are administered in series along the direction of flow of the syngas leaving expansion chamber 4.

The method according to the present invention also comprises an optional stage of controlling the quality of the syngas leaving the reactor.

In a preferred embodiment of the invention ash and charcoal are extracted by means of an extractor 8 which also controls their particle size before they are disposed of through a star valve 11 and an extraction screw (Figure 14).

The extraction system is constructed so as to prevent the formation of clinker or settling phenomena deriving from sintering of the ash or other low-melting substances.

In order to prevent ash and low-melting substances from sintering in gas outlet slots 7', in addition to separating the paths, the slots may be screened by the terminal refractory rim of the reactor itself.

The extractor is connected by means of an inverter to a PLC which, by monitoring information about pressure in the reactor, the level of the reactor and temperature, acts so that the quantity of residue extracted by volume is such that the volume of biomass that has to be processed is very much smaller than the volume of the reduction chamber, preferably approximately 15%.

Also, thanks to the irregular conformation of its surface area, the extractor as it rotates breaks up any layers of sintered material which might hinder discharge of biomass residues.

To extinguish the pyrogasification unit it is sufficient to close off the upper opening of the reactor (5' and 6') and switch off suction.

One advantage of the present invention is that of operating with an open reactor avoiding the possible disadvantages of a closed pressurised reactor.

Yet another advantage of the present pyrogasification unit is the fact that the syngas produced is subjected to high temperatures with a consequent reduction in tars.

The tar content of the syngas is reduced by keeping temperatures high and by increasing syngas residence times within the cracking zone. Thus the more extensive the cracking zone and the higher the temperatures the smaller will be the quantity of tar in the syngas.

Advantageously the syngas leaving the reactor will not require costly treatment systems and even more advantageously there will be no waste products and corresponding disposal problems.

**Claims**

1. Pyrogasification unit comprising:

   - a reactor (1) of refractory material of frustoconical shape that is completely open at its upper surface, defined by a lateral surface (2) in which the frustoconical shape of the reactor has an aperture angle $\alpha$ of between 20° and 40°, provided with a first upper opening (2') resulting in the only entry for gasifying agent and a second lower opening (2") for the exit of syngas;
   - an expansion chamber (4) placed in communication with the lower part of the reactor;
   - suction means (14) to generate a flow of gasifying agent and syngas within the reactor from top to bottom;
   - a conduit (10) for the exit of syngas downstream of the expansion chamber (4);
   - a collection system (12) for solid process wastes;

   the said lateral surface (2) being devoid of any entry points for the gasifying agent so that pyrolysis, oxidation and cracking reactions coexist at every point in the internal volume of the truncated cone with relative equilibrium between them controlled by the combination of the frustoconical shape and the extramolarity conditions of the said reactions, giving rise to a number of moles of syngas that is greater than the number of moles of gasifying agent.

2. Pyrogasification unit according to claim 1, further provided with a jacket with upper and lower openings.

3. Pyrogasification unit according to either of claims 1 or 2, further provided with a device for the extraction of solid process wastes.

4. Pyrogasification unit according to any one of claims 1-3, further provided with a levelling and mixing system comprising a rotating shaft fitted with blades and arms located radially along the rotating shaft.

5. Pyrogasification unit according to any one of claims 1-4, further provided with an extraction device comprising a cylindrical extractor (8), a rotating plate (20), first (21) and second (22) centring bushes, a protective housing (23) for the gears, a transmission shaft (26) for connection to the motor/gearbox unit and electric motor (25).

6. Pyrogasification process making use of a pyrogasification unit according to any one of the preceding claims, the said process comprising the main stages of:

(i) filling the pyrogasification unit with charcoal to a portion of between 6/8 and 7/8 of the height of the truncated cone;
(ii) igniting the charcoal by means of an external burner;
(iii) starting up the suction means, and when the charcoal reaches a temperature of at least 800°C adding biomass until the reactor is filled;
(iv) as the pyrogasification reaction proceeds, adding biomass, keeping the level to which the reactor is filled constant and at the same time drawing off syngas and the ashes produced from the bottom;

the said process being **characterised in that** the pyrolysis, oxidation and cracking reactions coexist at every point within the internal volume of the truncated cone, with relative equilibrium between them controlled by the combination of the frustoconical shape and the extramolarity conditions of the said reactions, generating a number of moles of syngas which is greater than the number of moles of gasifying agent.

7. Pyrogasification process according to the above claim in which the biomass and the gasification agent are only introduced via the upper opening (2') of the said reactor.

8. Pyrogasification process according to any one of claims 6-7, which is self-regulated through the combined effect of the extramolarity of the pyrogasification reactions and the frustoconical shape of the reactor, as a result of which each mole of gasifying agent generates approximately 2 moles of syngas, preferably 8/5 moles of syngas and entry of gasifying agent to the reactor is exclusively controlled by the back-pressure produced by expansion of the syngas produced in the presence of a cross-section which narrows as a function of the angle $\alpha$ of inclination of the reactor walls.

9. Pyrogasification process according to any one of claims 6-8 which is progressive and gradual throughout the volume of the reactor and from top to bottom in that the equilibrium between the reactions in the pyrolysis, oxidation and cracking stages proceeds according to exhaustion of the oxidising capacity of the gasifying agent.

10. Pyrogasification process according to any one of claims 6-9, in which the biomass is selected from at least one of the following materials: wood chips, pellets, briquettes of ligneous substance, shredded offcuts, wood waste or other biomass having a moisture content of below 30%.

11. Pyrogasification process according to any one of claims 6-10, in which the gasifying agent is air.

12. Pyrogasification process according to any one of claims 6-11, in which the transit velocity of the exiting gas lies between 2 and 4 m/s.

13. Pyrogasification process according to any one of claims 6-12, in which the time over which the syngas passes through the internal cracking volume is of the order of 1-2 seconds.

14. Pyrogasification process which gives rise to a cracking zone having a volume of approximately 8 times the volume of the biomass which is pyrolysed, thus increasing the efficiency of the reactions removing the tar present in the syngas.

15. Pyrogasification process which generates a volume at a temperature in excess of 1000°C which is approximately 8 times greater than the volume of the biomass which is pyrolysed, such high temperature zone encouraging the action of removing tars from the gas flow.

**Patentansprüche**

1. Pyrovergasungseinheit, aufweisend:

- einen Reaktor (1) aus feuerfestem Material in kegelstumpfartiger Form, welcher an seiner oberen Oberfläche komplett offen ausgebildet ist, definiert durch eine seitliche Oberfläche (2), in welcher die kegelstumpfartige Form des Reaktors einen Öffnungswinkel $\alpha$ von zwischen 20° und 40° aufweist, ausgestattet mit einer ersten oberen Öffnung (2'), welche im einzigen Einlass für Vergasungsmittel resultiert, und einer zweiten unteren Öffnung (2") für den Austritt von Synthesegas;
- eine Expansionskammer (4), welche in Austausch mit dem unteren Teil des Reaktors gesetzt wird;
- Absaugmittel (14) zur Herstellung eines Flusses von Vergasungsmittel und Synthesegas innerhalb des Reaktors von oben bis unten;
- eine Leitung (10) für den Austritt von Synthesegas stromabwärts von der Expansionskammer (4);
- ein Sammelsystem (12) für feste Verfahrensabfälle;

wobei die besagte seitliche Oberfläche (2) keine Eintrittsstellen für das Vergasungsmittel aufweist, sodass Pyrolyse-, Oxidations- und Spaltreaktionen an jeder Stelle innerhalb des internen Volumens des abgestumpften Kegels koexistieren, bei relativem Gleichgewicht zwischen einander, kontrolliert durch die Kombination von kegelstumpfartiger Form und den Extramolaritätsbedingungen der besagten Reaktionen, unter Herstellung einer Anzahl von Mol von Synthesegas, welche grösser ist als die Anzahl Mol des Vergasungsmittels.

2. Pyrovergasungseinheit gemäss Anspruch 1, ferner aufweisend einen Mantel mit oberen und unteren Öffnungen.

3. Pyrovergasungseinheit gemäss einem der Ansprüche 1 oder 2, ferner aufweisend eine Vorrichtung für die Extraktion von festen Verfahrensabfällen.

4. Pyrovergasungseinheit gemäss einem der Ansprüche 1-3, ferner aufweisend ein Nivellierungs- und Mischsystem, aufweisend einen rotierenden Schaft welcher mit Klingen und Armen ausgestattet ist, welche radial entlang des rotierenden Schaftes angeordnet sind.

5. Pyrovergasungseinheit gemäss einem der Ansprüche 1-4, ferner aufweisend eine Extraktionsvorrichtung, aufweisend einen zylindrischen Extraktor (8), eine Drehplatte (20), erste (21) und zweite (22) Zentrierbuchsen, ein Schutzgehäuse (23) für die Zahnräder, eine Antriebswelle (26) für die Verbindung mit dem Motor/der Getriebeeinheit und dem Elektromotor (25).

6. Pyrovergasungsverfahren, unter Verwendung einer Pyrovergasungseinheit gemäss einem der vorhergehenden Ansprüche, wobei das besagte Verfahren die folgenden Hauptschritte beinhaltet:

(i) Füllen der Pyrovergasungseinheit mit Holzkohle bis zu einem Anteil von zwischen 6/8 und 7/8 der Höhe des abgestumpften Kegels;
(ii) Anzünden der Holzkohle mittels eines externen Brenners;
(iii) In Betrieb nehmen des Absaugmittels, und wenn die Holzkohle eine Temperatur von mindestens 800°C erreicht, Beigabe von Biomasse bis der Reaktor gefüllt ist;
(iv) Während der fortlaufenden Pyrovergasungsreaktion, Beigabe von Biomasse, wobei der Füllwert des Reaktors konstant gehalten wird, unter gleichzeitiger Abführung von Synthesegas und der Asche von unten;

wobei das besagte Verfahren **dadurch gekennzeichnet ist, dass** die Pyrolyse-, Oxidations- und Spaltreaktionen an jeder Stelle innerhalb des internen Volumens des abgestumpften Kegels koexistieren, bei relativem Gleichgewicht zwischen einander, kontrolliert durch die Kombination von kegelstumpfartiger Form und den Extramolaritätsbedingungen der besagten Reaktionen, unter Herstellung einer Anzahl Mol von Synthesegas, welche grösser ist als die Anzahl Mol des Vergasungsmittels.

7. Pyrovergasungsverfahren gemäss dem obigen Anspruch, in welchem die Biomasse und das Vergasungsmittel nur via die obere Öffnung (2') des besagten Reaktors eingeführt werden.

8. Pyrovergasungsverfahren gemäss einem der Ansprüche 6-7, welches selbstreguliert ist durch die kombinierte Wirkung der Extramolarität der Pyrovergasungsreaktionen und der kegelstumpfartigen Form des Reaktors, was zur Folge hat, dass jedes Mol von Vergasungsmittel ungefähr 2 Mol von Synthesegas generiert, vorzugsweise 8/5 Mol von Synthesegas und dass der Eintritt von Vergasungsmittel in den Reaktor ausschliesslich durch den Gegendruck kontrolliert wird, welcher durch Expansion des in Anwesenheit eines als eine Funktion des Winkels $\alpha$ der Neigung der Reaktorwände schmaler werdenden Querschnittes produzierten Synthesegases produziert wird.

9. Pyrovergasungsverfahren gemäss einem der Ansprüche 6-8, welches progressiv und graduell ist durch das Volumen des Reaktors hindurch und von oben bis unten, wobei das Gleichgewicht zwischen den Reaktionen in den Pyrolyse-, Oxidations- und Spaltschritten sich gemäss Erschöpfung der Oxidationsfähigkeit des Vergasungsmittels verhält.

**10.** Pyrovergasungsverfahren gemäss einem der Ansprüche 6-9, in welchem die Biomasse ausgewählt wird aus mindestens einem der folgenden Materialien: Holzschnitzel, Pellets, Briketts aus holzartigem Stoff, geschredderte Verschnitte, Holzabfall oder andere Biomasse mit einem Feuchtigkeitsgehalt von unter 30%.

**11.** Pyrovergasungsverfahren gemäss einem der Ansprüche 6-10, in welchem das Vergasungsmittel Luft ist.

**12.** Pyrovergasungsverfahren gemäss einem der Ansprüche 6-11, in welchem die Übergangsgeschwindigkeit des ausströmenden Gases zwischen 2 und 4 m/s liegt.

**13.** Pyrovergasungsverfahren gemäss einem der Ansprüche 6-12, in welchem die Zeit, während welcher das Synthesegas durch das interne Spaltvolumen durchströmt, im Bereich von 1-2 Sekunden liegt.

**14.** Pyrovergasungsverfahren, welches eine Spaltzone hervorbringt, welche ein Volumen von ungefähr 8 Mal das Volumen der Biomasse, welche pyrolysiert wird, hervorbringt, wobei dadurch die Effizienz der Reaktionen, welche den im Synthesegas enthaltenen Teer entfernen, erhöht wird.

**15.** Pyrovergasungsverfahren, welches bei einer Temperatur höher als 1000°C ein Volumen hervorbringt, welches ungefähr 8 Mal grösser ist als das Volumen der Biomasse, welche pyrolysiert wird, wobei eine solche Zone von hoher Temperatur das Entfernen von Teeren aus dem Gasstrom fördert.

## Revendications

**1.** Une unité de pyrogazéification comprenant :

- un réacteur (1) en matériau réfractaire de forme tronconique qui est complètement ouvert au niveau de sa surface supérieure, défini par une surface latérale (2) dans laquelle la de forme tronconique du réacteur possède un angle d'ouverture $\alpha$ entre 20° et 40°, pourvu d'une première ouverture supérieure (2') donnant la seule entrée pour un agent gazéifiant et d'une deuxième ouverture inférieure (2") pour la sortie du gaz de synthèse;
- une chambre d'expansion (4) mise en communication avec la partie inférieure de le réacteur;
- des moyens d'aspiration (14) pour générer un flux d'agent gazéifiant et de gaz de synthèse à l'intérieur du réacteur de haut en bas;
- un conduit (10) pour la sortie de gaz de synthèse en aval de la chambre d'expansion (4);
- un système de collecte (12) pour des déchets de procédé solides;

ladite surface latérale (2) étant dépourvue de tout point d'entrée pour l'agent de gazéification de sorte que les réactions de pyrolyse, d'oxydation et de craquage coexistent en tout point du volume interne du cône tronqué avec un équilibre relatif entre elles contrôlé par la combinaison de la forme tronconique et des conditions d'extramolarité desdites réactions, menant à un nombre de moles de gaz de synthèse supérieur au nombre de moles d'agent gazéifiant.

**2.** Unité de pyrogazéification selon la revendication 1, munie en outre d'une chemise avec des ouvertures supérieure et inférieure.

**3.** Unité de pyrogazéification selon l'une des revendications 1 ou 2, munie en outre d'un dispositif pour l'extraction des déchets de procédé solides.

**4.** Unité de pyrogazéification selon l'une quelconque des revendications 1 à 3, munie en outre d'un système de nivellement et de mélange comprenant un arbre rotatif équipé de lames et de bras situés radialement le long de l'arbre rotatif.

**5.** Unité de pyrogazéification selon l'une quelconque des revendications 1 à 4, munie en outre d'un dispositif d'extraction comprenant un extracteur cylindrique (8), une plaque rotative (20), des première (21) et deuxième (22) douilles de centrage, un boîtier de protection (23) pour les engrenages, un arbre de transmission (26) pour la connexion à l'unité moteur / boîte de vitesses et au moteur électrique (25).

**6.** Procédé de pyrogazéification utilisant une unité de pyrogazéification selon l'une quelconque des revendications précédentes, ledit procédé comprenant les étapes principales de:

(i) remplir l'unité de pyrogazéification avec du charbon sur une portion comprise entre 6/8 et 7/8 de la hauteur du cône tronqué;

(ii) allumer le charbon de bois au moyen d'un brûleur externe;

(iii) démarrer le moyen d'aspiration, et lorsque le charbon atteint une température d'au moins 800 ° C, ajouter de la biomasse jusqu'à ce que le réacteur soit rempli;

(iv) au fur et à mesure de la réaction de pyrogazéification, ajouter de la biomasse, maintenir constant le niveau auquel le réacteur est rempli tout en soutirant le gaz de synthèse et les cendres produites par le bas;

ledit procédé étant **caractérisé en ce que** les réactions de pyrolyse, d'oxydation et de craquage coexistent en tout point du volume interne du cône tronqué, avec un équilibre relatif entre eux contrôlé par la combinaison de la forme tronconique et des conditions d'extramolarité desdites réactions, générant un nombre de moles de gaz de synthèse supérieur au nombre de moles d'agent gazéifiant.

7. Procédé de pyrogazéification selon la revendication précédente dans lequel la biomasse et l'agent de gazéification ne sont introduits que par l'ouverture supérieure (2') dudit réacteur.

8. Procédé de pyrogazéification selon l'une quelconque des revendications 6 à 7, qui est autorégulé par l'effet combiné de l'extramolarité des réactions de pyrogazéification et de la forme tronconique du réacteur, à la suite de quoi chaque mole d'agent gazéifiant génère environ 2 moles de gaz de synthèse, de préférence 8/5 moles de gaz de synthèse et l'entrée d'agent gazéifiant dans le réacteur est exclusivement contrôlée par la contre-pression produite par l'expansion du gaz de synthèse produit en présence d'une section transversale qui se rétrécit en fonction de l'angle d'inclinaison $\alpha$ des parois du réacteur.

9. Procédé de pyrogazéification selon l'une quelconque des revendications 6 à 8 qui est progressif et graduel à travers le volume du réacteur et de haut en bas en ce que l'équilibre entre les réactions aux étapes de pyrolyse, oxydation et craquage se déroule en fonction de l'épuisement de la capacité oxydante de l'agent gazéifiant.

10. Procédé de pyrogazéification selon l'une quelconque des revendications 6 à 9, dans lequel la biomasse est choisie parmi au moins l'un des matériaux suivants: copeaux de bois, granulés, briquettes de substance ligneuse, chutes déchiquetées, déchets de bois ou autre biomasse ayant une teneur en humidité en dessous de 30%.

11. Procédé de pyrogazéification selon l'une quelconque des revendications 6 à 10, dans lequel l'agent gazéifiant est l'air.

12. Procédé de pyrogazéification selon l'une quelconque des revendications 6 à 11, dans lequel la vitesse de transit du gaz sortant se situe entre 2 et 4 m / s.

13. Procédé de pyrogazéification selon l'une quelconque des revendications 6 à 12, dans lequel le temps pendant lequel le gaz de synthèse passe à travers le volume de craquage interne est de l'ordre de 1 à 2 secondes.

14. Procédé de pyrogazéification donnant lieu à une zone de craquage ayant un volume d'environ 8 fois le volume de la biomasse pyrolysée, augmentant ainsi l'efficacité des réactions d'élimination du goudron présent dans le gaz de synthèse.

15. Procédé de pyrogazéification qui génère un volume à une température supérieure à 1000 ° C qui est environ 8 fois supérieur au volume de la biomasse pyrolysée, une telle zone à haute température favorisant l'action d'élimination des goudrons du flux gazeux.

Fig. 1

Fig. 2a

Fig. 2b

Fig. 3

Fig. 4

endothermic
engine

Fig.5

Fig. 6

endothermic
engine

1200°C

2

Fig. 7

18

19

Fig. 8

$V_p$

$V_r$

$\dfrac{V_p}{V_r} \ll 1$

Fig. 9

Fig. 10a

Fig. 10b

Fig. 10c

Fig. 11

15

19

15'

15"

20

gasifying
agent

syngas

Fig. 12

Fig. 13

Fig. 14

Fig. 15a

Fig. 15b – cross-section A-A'

Fig. 15c

Fig. 15d

8

21

24

22

23

26

27

25

discharge of ash

Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015218472 A
- EP 1203802 A
- US 2006265954 A